# EUROPÄISCHE PATENTANMELDUNG

(11) **EP 1 745 992 A1**
(43) Veröffentlichungstag der Anmeldung: **24.01.2007**
(21) Anmeldenummer: 06014704.8
(22) Anmeldetag: 14.07.2006
(51) Int. Cl.: B60R 21/276

(54) **Gassackmodul**

(30) Priorität: 18.07.2005 DE 202005011296 U
(71) Anmelder: TRW Automotive Safety Systems GmbH, 63743 Aschaffenburg (DE)
(72) Erfinder: Staudt, Holger, 63762 Grossostheim (DE); Derrick, John-Oliver, 97265 Hettstadt (DE)
(74) Vertreter: Sties, Jochen

(57) **Zusammenfassung**

Ein Gassackmodul (10) für eine Fahrzeuginsassen-Rückhaltevorrichtung hat einen Gasgenerator (12) zum Befüllen eines Gassacks (14), wenigstens eine in einem festen Bauteil des Gassackmoduls (10) gebildete Abströmöffnung (18), durch die das vom Gasgenerator (12) erzeugte Gas abströmen kann, und ein Schieberelement (26), das verstellbar ist zwischen einer Schließstellung, in der es die Abströmöffnung (18) zumindest weitgehend verschließt, und einer Öffnungsstellung, in der es die Abströmöffnung (18) freigibt. Weiterhin ist ein Steuerglied (28) für das Schieberelement (26) vorgesehen, das eine Druckfläche (30) aufweist, die mit dem Druck des vom Gasgenerator (12) erzeugten Gases beaufschlagt werden kann, wobei bei Vorliegen eines bestimmten Drucks das Steuerglied (28) eine Stellungsänderung des Schieberelements (26) bewirkt.

## Beschreibung

Die Erfindung betrifft ein Gassackmodul für eine Fahrzeuginsassen-Rückhaltevorrichtung, mit einem Gasgenerator zum Befüllen eines Gassacks und wenigstens einer in einem festen Bauteil des Gassackmoduls gebildeten Abströmöffnung, durch die das vom Gasgenerator erzeugte Gas abströmen kann.

Für gewöhnlich soll bei einem Gassackmodul der Gassack mit dem vom Gasgenerator erzeugten Gas möglichst schnell befüllt werden. In bestimmten Fällen ist es allerdings wünschenswert, den Gassack nicht mit dem gesamten verfügbaren Gasvolumen zu befüllen oder, allgemeiner, Gas ausströmen zu lassen, weshalb im Gassackmodul Abströmöffnungen vorgesehen sind, durch deren Freigabe der Druck im Gassack begrenzt werden kann.

In der Literatur sind zahlreiche Lösungsmöglichkeiten beschrieben, die es sich zum Ziel gesetzt haben, bei einem Unfall den Innendruck und damit die Rückhaltewirkung des Gassacks lastfallabhängig zu regeln. So sind beispielsweise Gassackmodule bekannt, bei denen eine Abströmöffnung in einem Gehäuse des Moduls im geschlossenen Zustand durch einen Schieber oder dergleichen verdeckt ist, der zur Freigabe der Öffnung verschoben werden kann. Derartige Schieber werden beispielsweise magnetisch oder mittels eines Elektromotors bewegt und sind daher sehr aufwendig und vergleichsweise langsam.

Aus der US 5 695 214 ist ein Gassackmodul bekannt, bei dem mehrere im Modulgehäuse angeordnete Abströmöffnungen dadurch freigegeben werden, daß ein klappenartiges Verschlußelement aus einer geschlossenen in eine geöffnete Stellung gebracht wird. Dabei ist das Verschlußelement in der geschlossenen Stellung mittels eines Sprengbolzens mit dem Modulgehäuse fest verbunden. Es sind mehrere Sensoren vorgesehen, die die Position eines Fahrzeuginsassen, dessen Größe, die Schwere des Zusammenstoßes sowie die Umgebungstemperatur bestimmen. Der Sprengbolzen wird in einem Auslösefall des Gassacks in Abhängigkeit von diesen Parametern aktiviert, um die Abströmöffnungen freizugeben. Ein solches System mit einer elektronischen Sensoreinrichtung ist jedoch vergleichsweise aufwendig und damit teuer. Ein weiterer Nachteil besteht darin, daß im Modulgehäuse Bauraum für die Klappe und den Sprengbolzen vorgehalten werden muß.

Demgegenüber schafft die Erfindung ein Gassackmodul, bei dem zusätzliche Abströmöffnungen im Modul zunächst abgedeckt sind und bei Bedarf freigegeben werden, und das sich durch einen einfachen Aufbau sowie geringe Herstellungskosten auszeichnet.

Dazu ist bei einem Gassackmodul der eingangs genannten Art ein Schieberelement vorgesehen, das verstellbar ist zwischen einer Schließstellung, in der es die Abströmöffnung zumindest weitgehend verschließt, und einer Öffnungsstellung, in der es die Abströmöffnung freigibt. Weiterhin umfaßt das Gassackmodul ein Steuerglied für das Schieberelement, das eine Druckfläche aufweist, die mit dem Druck des vom Gasgenerator erzeugten Gases beaufschlagt werden kann, wobei bei Vorliegen eines bestimmten Drucks das Steuerglied eine Stellungsänderung des Schieberelements bewirkt. Bei der erfindungsgemäßen Ausgestaltung wird folglich allein der Druck des vom Gasgenerator erzeugten Gases genutzt, um eine in einem festen Bauteil des Moduls ausgebildete Abströmöffnung freizugeben. Hierbei ist unter dem festen Bauteil ein starres Bauteil des Moduls, also beispielsweise ein Generatorträger oder ein Gassackhalteblech, zu verstehen. Der Gasdruck beaufschlagt das Steuerglied (bzw. dessen Druckfläche), welches wiederum mit dem Schieberelement derart in Wirkverbindung steht, daß bei einer durch den Gasdruck hervorgerufenen Bewegung des Steuerglieds auch eine Stellungsänderung des Schieberelements erfolgt. Insbesondere befindet sich das Schieberelement anfangs in seiner Schließstellung und wird bei ausreichender Beaufschlagung der Druckfläche in seine Öffnungsstellung gebracht. (Natürlich wäre es umgekehrt auch möglich, daß sich die Abströmöffnung zu Beginn der Gassackentfaltung im geöffneten Zustand befindet und nur bei Bedarf verschlossen wird.)

Die erfindungsgemäße Ausgestaltung stellt also durch druckabhängige Freigabe der Abströmöffnung auf einfache Weise sicher, daß der Druck im Gassackinneren einen bestimmten, zuvor festgelegten Wert nicht überschreitet. So ist z.B. gewährleistet, daß der Gassack, unabhängig von der Umgebungstemperatur, immer über eine ausreichende Rückhaltewirkung verfügt und gleichzeitig der Gassack nicht zu hart ist. Dies ist besonders bei hohen Temperaturen von Bedeutung, bei denen auch der Druck des erzeugten Gases höher ist. Zudem zeichnet sich das erfindungsgemäße Gassackmodul durch eine zuverlässige und preisgünstige Ausgestaltung des Öffnungsmechanismus aus.

Gemäß einer ersten Ausführungsform der Erfindung gelangt das Steuerglied bei einer Beaufschlagung der Druckfläche mit Druckgas in Eingriff mit dem Schieberelement und verschiebt dieses zwischen der Schließ- und der Öffnungsstellung. Natürlich ist es ebenso möglich, daß das Steuerglied bereits im nicht betätigten Zustand in das Schieberelement eingreift.

Das Schieberelement ist vorzugsweise eine linear verschiebbare Platte, die in einer entsprechenden Führung am festen Bauteil des Gassackmoduls angeordnet ist.

Das Steuerglied weist vorteilhaft eine Steuerkante auf, die bei der Beaufschlagung mit Druckgas an einer Kante des Schieberelements entlang gleitet. Insbesondere schließt die Steuerkante dabei sowohl mit der Verschiebungsrichtung des Steuerglieds als auch mit der Verschiebungsrichtung des Schieberelements einen spitzen Winkel ein. So ergibt sich ein einfacher Mechanismus zur Verschiebung des Schieberelements bei Betätigung des Steuerglieds.

Gemäß einer zweiten Ausführungsform der Erfindung ist das Steuerglied zwischen einer Sperrstellung, in der es das Schieberelement relativ zum festen Bauteil fixiert, und einer Freigabestellung, in der das Schieberelement seine Stellung ändern kann, bewegbar. Das Steuerglied ist also hier als eine Art Freigabemechanismus ausgebildet, der bei Betätigung das zuvor festgelegte Schieberelement freigibt, so daß es sich aus der Schließstellung in die Öffnungsstellung bewegen kann.

Vorteilhaft ist ein Federelement vorgesehen, das das Schieberelement in die Öffnungsstellung beaufschlagt. Auf diese Weise wird erreicht, daß nach der Freigabe des Schieberelements durch das Steuerglied das Schieberelement zuverlässig in die Öffnungsstellung verschoben wird.

Das Schieberelement kann eine drehbar gelagerte Platte oder eine linear verschiebbare Platte sein. In beiden Fällen ist die Platte so am festen Bauteil des Gassackmoduls angebracht, daß sie die Abströmöffnung zunächst (zumindest weitgehend) verschließt und nach der Freigabe durch das Steuerglied eine Drehbewegung bzw. lineare Bewegung ausführt, durch die sie die Abströmöffnung freigibt.

Vorzugsweise weist das Steuerglied einen Verriegelungsstift auf, der im nicht betätigten Zustand in eine Ausnehmung des Schieberelements eingreift, wodurch das Schieberelement relativ zum festen Bauteil des Gassackmoduls fixiert wird. Wird das Steuerglied mit Druck beaufschlagt, verläßt der Verriegelungsstift die Ausnehmung des Schieberelements und gibt es dadurch frei.

Das Steuerglied kann eine Feder aufweisen, die den Verriegelungsstift in Eingriff mit der Ausnehmung hält. Wird dann die Druckfläche des Steuerglieds mit einem genügend großen Druck beaufschlagt, um die durch die Feder ausgeübte Kraft zu kompensieren, verläßt der Verriegelungsstift die Ausnehmung, und das Schieberelement kann sich bewegen.

Gemäß einer bevorzugten Ausführungsform ist der Gasgenerator ein mehrstufiger Gasgenerator. In diesem Fall kann Vorsorge getroffen werden, daß das Steuerglied erst bei Zündung einer späteren, beispielsweise der zweiten Stufe des Gasgenerators mit Druckgas vom Gasgenerator beaufschlagt wird. Dadurch entfaltet sich der Gassack zunächst rasch bei geschlossener Abströmöffnung, und bei Zündung der späteren Stufe wird die Abströmöffnung freigegeben, um dem Fahrzeuginsassen einen weicheren Gassack zur Verfügung zu stellen.

Das Steuerglied wird vorzugsweise bei der Beaufschlagung mit Druckgas in eine Richtung verschoben, die senkrecht zur Verschiebungsrichtung des Schieberelements ist. So wird das Steuerglied bei der Beaufschlagung mit Druckgas bevorzugt in vertikaler Richtung nach unten verschoben und verschiebt dabei ein unterhalb des Gasgenerators am festen Bauteil des Gassackmoduls angeordnetes Schieberelement horizontal, um die im festen Bauteil ausgebildete Abströmöffnung freizugeben. Auf diese Weise ergibt sich eine besonders platzsparende Ausgestaltung.

Weitere Merkmale und Vorteile der Erfindung ergeben sich aus der nachfolgenden Beschreibung mehrerer bevorzugter Ausführungsformen anhand der beigefügten Zeichnung. In dieser zeigt:
- Figur 1 einen Halbschnitt eines Gassackmoduls gemäß einer ersten Ausführungsform der Erfindung mit einem Schieberelement in der Schließstellung;
- Figur 2 einen Halbschnitt des Gassackmoduls aus Figur 1, jedoch mit dem Schieberelement in der Öffnungsstellung;
- Figur 3 einen Halbschnitt eines Gassackmoduls gemäß einer zweiten Ausführungsform der Erfindung mit dem Schieberelement in der Schließstellung; und
- Figur 4 eine Draufsicht auf das Schieberelement des Gassackmoduls aus Figur 3.

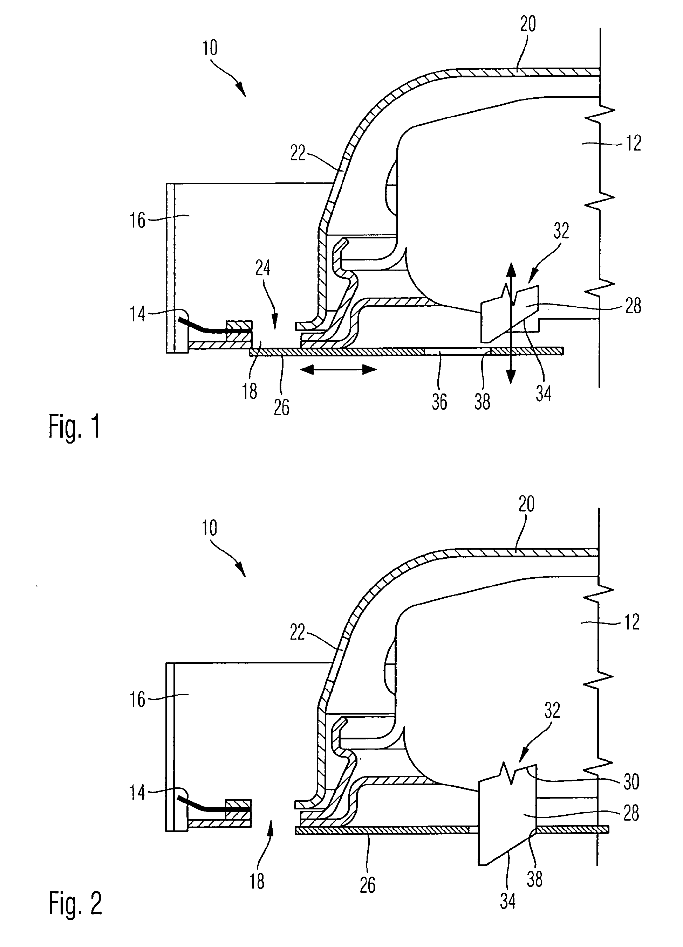

In Figur 1 ist ein Gassackmodul 10 dargestellt, das insbesondere für einen Einsatz als Fahrergassackmodul vorgesehen, jedoch nicht darauf beschränkt ist. Das Gassackmodul 10 weist einen Gasgenerator 12 und einen in der Figur nur angedeuteten Gassack 14 auf und wird im nicht ausgelösten Zustand durch eine zum Fahrzeuginsassen gerichtete Abdeckkappe (nicht gezeigt) begrenzt. In einem festen Bauteil des Gassackmoduls 10 in Form eines Generatorträgers 16 ist eine Abströmöffnung 18 ausgebildet. Ein Käfig 20, der den Gasgenerator 12 umgibt und gleichzeitig als Diffusor mit Öffnungen 22 und als Halteblech für den Gassack 14 dient, weist in seinem unteren, den Gassack 14 festlegenden Teil eine zur Abströmöffnung 18 korrespondierende Öffnung 24 auf. Der Gassack 14 hat in diesem Bereich ebenfalls eine Öffnung, oder aber der Gassack 14 wird seitlich außerhalb der Abströmöffnung 18 mittels des Käfigs 20 am Modul befestigt, wie in Figur 1 dargestellt.

In dem in Figur 1 gezeigten Zustand ist die Abströmöffnung 18 durch ein Schieberelement 26 in Form einer linear verschiebbaren Platte verschlossen, das auf der Unterseite des Generatorträgers 16 verschiebbar angeordnet ist. Ferner ist ein Steuerglied 28 vorgesehen, das an seinem in der Figur oberen Ende eine Druckfläche 30 aufweist, die in der in Figur 1 gezeigten Stellung durch eine Öffnung 32 im Gehäuse des Gasgenerators 12 in das Innere des Generatorgehäuses ragt. An seinem in der Figur unteren Ende weist das Steuerglied 28 eine Steuerkante 34 auf, die mit der Vertikalen, also der Verschiebungsrichtung des Steuerglieds 28, einen spitzen Winkel von ca. 55 bis 60° einschließt. Im Schieberelement 26 ist eine Ausnehmung 36 vorgesehen, die auf der in der Figur rechten Seite durch eine Kante 38 begrenzt wird, die sich unterhalb der Steuerkante 34 befindet.

In einem Auslösefall des Gassackmoduls 10 ist die Abströmöffnung 18, wie in Figur 1 gezeigt, zunächst durch das Schieberelement 26 verschlossen. Durch abströmende Gase aus dem Gasgenerator 12 wird die Druckfläche 30 des Steuerglieds 28 mit Druck beaufschlagt. Überschreitet dieser Druck einen vorbestimmten Wert, so wird das Steuerglied 28 in der Figur 1 nach unten verschoben, wodurch die Steuerkante 34 in Eingriff mit dem Schieberelement 26 bzw. mit dessen Kante 38 gelangt. Dadurch wird bei der nach unten gerichteten Gleitbewegung des Steuerglieds 28 das Schieberelement 26 nach dem Prinzip einer "schiefen Ebene" in den Figuren nach rechts verschoben und gibt die Abströmöffnung 18 frei (siehe Figur 2). Durch die geneigte Steuerkante 34 wird also die vertikale Bewegung des Steuerglieds 28 in eine horizontale Bewegung des Schieberelements 26 umgewandelt. Die Abströmöffnung 18 ist nun frei, weshalb die vom Gasgenerator 12 erzeugten Gase zum Teil in die Umgebung entweichen können. Dadurch steht dem Fahrzeuginsassen ein weicherer Gassack 14 zur Verfügung.

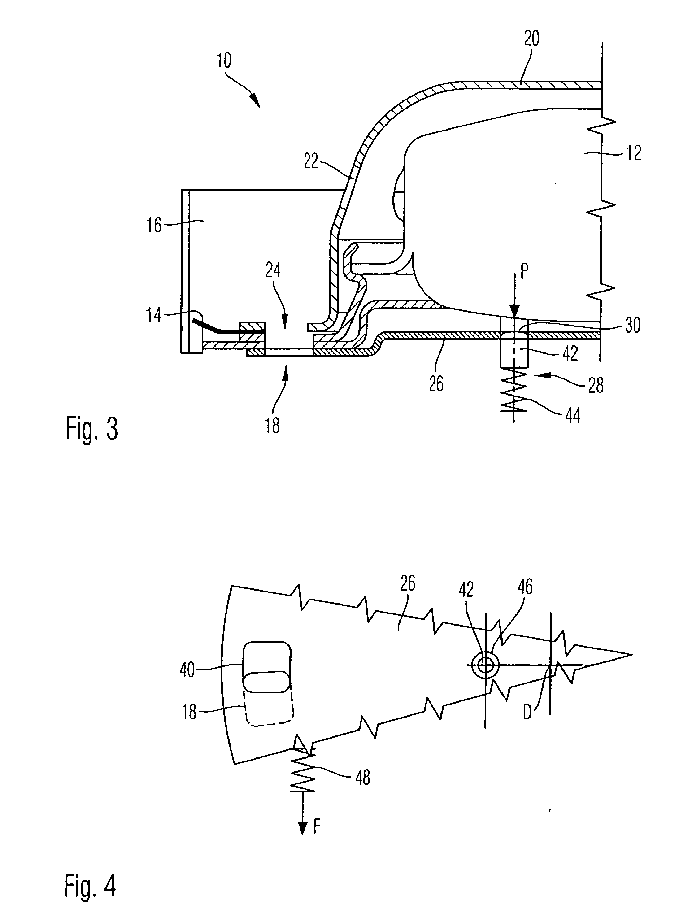

Die Figuren 3 und 4 zeigen eine weitere Ausführungsform des erfindungsgemäßen Gassackmoduls 10, wobei gleiche Bauteile gleiche Bezugszeichen tragen und im folgenden nur auf die Unterschiede zur ersten Ausführungsform eingegangen werden soll.

Das Schieberelement 26 gemäß der zweiten Ausführungsform ist als Drehschieberelement, d.h. als eine Platte ausgebildet, die im Punkt D drehbar am Generatorträger 16 gelagert ist. Alternativ kann ebenso eine linear verschiebbare Platte, wie mit Bezug auf die Figuren 1 und 2 beschrieben, eingesetzt werden. Das Schieberelement 26 weist eine Öffnung 40 auf, die mit der Abströmöffnung 18 in Deckung gebracht werden kann. Das Steuerglied 28 umfaßt einen Verriegelungsstift 42 sowie eine Feder 44, die den Verriegelungsstift 42 in Eingriff mit einer Ausnehmung 46 im Schieberelement 26 hält (siehe Figur 3).

Es ist eine weitere Feder 48 vorgesehen, die sich z.B. am Generatorträger 16 abstützt und das Schieberelement 26 in seine Öffnungsstellung beaufschlagt. Bei dieser Feder 48 kann es sich um eine Spiralfeder, eine Schenkelfeder oder, wie in Figur 4 dargestellt, eine Zugfeder handeln.

In der in Figur 3 gezeigten Ausgangssituation unmittelbar nach dem Zünden des Gasgenerators 12 ist die Abströmöffnung 18 zunächst zum größten Teil durch das Schieberelement 26 verschlossen, d.h. die beiden Öffnungen 40, 18 überlappen sich zu einem kleinen Teil, wodurch bereits im Ausgangszustand ein gewisser Teilbereich der Abströmöffnung freiliegt. Alternativ kann die Abströmöffnung 18 in der Ausgangssituation vollständig verschlossen sein, indem sich die Öffnung 40 im Schieberelement 26 überhaupt nicht in Deckung mit der Abströmöffnung 18 befindet.

Wird nun die Oberseite des Verriegelungsstifts 42, die wiederum eine Druckfläche 30 darstellt, mit einem bestimmten, vom Gasgenerator 12 erzeugten Druck beaufschlagt, so wird der Verriegelungsstift 42 gegen die Spannung der Feder 44 nach unten gedrückt und gibt dadurch die Ausnehmung 46 im Schieberelement 26 frei. Das Schieberelement 26, das nun nicht mehr relativ zum Generatorträger 16 fixiert ist, dreht sich aufgrund der durch die vorgespannte Feder 48 ausgeübten Zugkraft F entgegen dem Uhrzeigersinn (siehe Figur 4), so daß die Öffnung 40 des Schieberelements 26 genau unterhalb der Abströmöffnung 18 im Generatorträger 16 zu liegen kommt. Dadurch ist die Abströmöffnung 18 (vollständig) freigegeben und Gase können ausströmen.

Bei der in den Figuren 3 und 4 gezeigten Ausführungsform ist also das Steuerglied 28 als Verriegelungs- bzw. Freigabemechanismus ausgeführt. Auch hierbei ist wieder die Verschiebungsrichtung des Steuerglieds 28 senkrecht zur Verschiebungsrichtung des Schieberelements 26.

Der Gasgenerator 12 kann in allen beschriebenen Ausführungsformen ein zwei- oder mehrstufiger Gasgenerator sein, wobei dann das Steuerglied 28 so angeordnet ist, daß es erst bei Zündung der zweiten (oder einer späteren) Stufe des Gasgenerators 12 mit Druckgas beaufschlagt wird. Dadurch entfaltet sich der Gassack 14 zunächst rasch bei geschlossener Abströmöffnung 18, und bei Zündung der späteren Stufe wird die Abströmöffnung 18 freigegeben, um dem Fahrzeuginsassen einen weicheren Gassack zur Verfügung zu stellen.

## Patentansprüche

1. Gassackmodul für eine Fahrzeuginsassen-Rückhaltevorrichtung, mit
einem Gasgenerator (12) zum Befüllen eines Gassacks (14),
wenigstens einer in einem festen Bauteil des Gassackmoduls (10) gebildeten Abströmöffnung (18), durch die das vom Gasgenerator (12) erzeugte Gas abströmen kann,
einem Schieberelement (26), das verstellbar ist zwischen einer Schließstellung, in der es die Abströmöffnung (18) zumindest weitgehend verschließt, und einer Öffnungsstellung, in der es die Abströmöffnung (18) freigibt, und
einem Steuerglied (28) für das Schieberelement (26), das eine Druckfläche (30) aufweist, die mit dem Druck des vom Gasgenerator (12) erzeugten Gases beaufschlagt werden kann, wobei bei Vorliegen eines bestimmten Drucks das Steuerglied (28) eine Stellungsänderung des Schieberelements (26) bewirkt.

2. Gassackmodul nach Anspruch 1, **dadurch gekennzeichnet, daß** das Steuerglied (28) bei einer Beaufschlagung der Druckfläche (30) mit Druckgas in Eingriff mit dem Schieberelement (26) gelangt und dieses zwischen der Schließ- und der Öffnungsstellung verschiebt.

3. Gassackmodul nach einem der vorhergehenden Ansprüche, **dadurch gekennzeichnet, daß** das Schieberelement (26) eine linear verschiebbare Platte ist.

4. Gassackmodul nach einem der vorhergehenden Ansprüche, **dadurch gekennzeichnet, daß** das Steuerglied (28) eine Steuerkante (34) aufweist, die bei der Beaufschlagung mit Druckgas an einer Kante (38) des Schieberelements (26) entlang gleitet.

5. Gassackmodul nach Anspruch 4, **dadurch gekennzeichnet, daß** die Steuerkante (34) sowohl mit der Verschiebungsrichtung des Steuerglieds (28) als auch mit der Verschiebungsrichtung des Schieberelements (26) einen spitzen Winkel einschließt.

6. Gassackmodul nach Anspruch 1, **dadurch gekennzeichnet, daß** das Steuerglied (28) zwischen einer Sperrstellung, in der es das Schieberelement (26) relativ zum festen Bauteil fixiert, und einer Freigabestellung, in der das Schieberelement (26) seine Stellung ändern kann, bewegbar ist.

7. Gassackmodul nach Anspruch 6, **dadurch gekennzeichnet, daß** ein Federelement (48) vorgesehen ist, das das Schieberelement (26) in die Öffnungsstellung beaufschlagt.

8. Gassackmodul nach Anspruch 6 oder Anspruch 7, **dadurch gekennzeichnet, daß** das Schieberelement (26) eine drehbar gelagerte Platte ist.

9. Gassackmodul nach Anspruch 6 oder Anspruch 7, **dadurch gekennzeichnet, daß** das Schieberelement (26) eine linear verschiebbare Platte ist.

10. Gassackmodul nach einem der Ansprüche 6 bis 9, **dadurch gekennzeichnet, daß** das Steuerglied (28) einen Verriegelungsstift (42) aufweist, der im nicht betätigten Zustand in eine Ausnehmung (46) des Schieberelements (26) eingreift.

11. Gassackmodul nach Anspruch 10, **dadurch gekennzeichnet, daß** das Steuerglied (28) eine Feder (44) aufweist, die den Verriegelungsstift (42) in Eingriff mit der Ausnehmung (46) hält.

12. Gassackmodul nach einem der vorhergehenden Ansprüche, **dadurch gekennzeichnet, daß** der Gasgenerator (12) ein mehrstufiger Gasgenerator ist.

13. Gassackmodul nach einem der vorhergehenden Ansprüche, **dadurch gekennzeichnet, daß** das Steuerglied (28) bei der Beaufschlagung mit Druckgas in eine Richtung verschoben wird, die senkrecht zur Verschiebungsrichtung des Schieberelements (26) ist.
